(19) Europäisches Patentamt
European Patent Office
Office européen des brevets

(11) **EP 1 794 858 B1**

(12) **FASCICULE DE BREVET EUROPEEN**

(45) Date de publication et mention de la délivrance du brevet:
**09.11.2011 Bulletin 2011/45**

(21) Numéro de dépôt: **05800577.8**

(22) Date de dépôt: **01.09.2005**

(51) Int Cl.:
**H02G 13/00** *(2006.01)*

(86) Numéro de dépôt international:
**PCT/FR2005/002184**

(87) Numéro de publication internationale:
**WO 2006/027483 (16.03.2006 Gazette 2006/11)**

(54) **METHODE D'EVALUATION DE L'ETENDUE DE LA ZONE DE PROTECTION CONFEREE PAR UN DISPOSITIF DE CAPTURE DE COUP DE FOUDRE**

VERFAHREN ZUR BEWERTUNG DES AUSMASSES DES EINER BELEUCHTUNGSERFASSUNGSEINRICHTUNG GEWÄHRTEN SCHUTZBEREICHS

METHOD FOR EVALUATING THE EXTENT OF THE PROTECTION AREA GRANTED BY A LIGHTNING CAPTURING DEVICE

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **02.09.2004 FR 0409318**

(43) Date de publication de la demande:
**13.06.2007 Bulletin 2007/24**

(73) Titulaire: **ABB France**
**92566 Rueil-Malmaison Cedex (FR)**

(72) Inventeurs:
• **BERGER, Gérard Maurice**
  **91120 Palaiseau (FR)**
• **AÏT-AMAR, Sonia**
  **91400 Orsay (FR)**

(74) Mandataire: **Reinhardt, Yves**
**Hirsch & Associés**
**58, Avenue Marceau**
**75008 Paris (FR)**

(56) Documents cités:
**FR-A- 2 724 232    US-A- 5 365 398**
**US-B1- 6 320 119**

EP 1 794 858 B1

**Description**

DOMAINE TECHNIQUE

La présente invention se rapporte au domaine technique général des méthodes d'évaluation de l'étendue de la zone de protection, en particulier dans la direction latérale, conférée par des dispositifs de capture de coups de foudre, tels que des paratonnerres à tige simple ou à dispositif d'amorçage, des dispositifs multi-pointes ou des cages maillées.

La présente invention concerne plus particulièrement une méthode d'évaluation de l'étendue de la zone de protection conférée par au moins un dispositif de capture de coup de foudre, ledit coup de foudre étant formé par la propagation et la jonction d'un traceur ascendant et d'un traceur descendant, ladite méthode étant basée sur un modèle de progression de traceur dans lequel chaque traceur est modélisé par une succession de segments chargés électriquement, chaque segment s'étendant, dans le sens de sa propagation, entre une extrémité arrière et une extrémité avant.

La présente invention concerne également un programme informatique comprenant un moyen de code de programme informatique adapté pour exécuter les étapes d'une méthode d'évaluation de l'étendue de la zone de protection conférée par au moins un dispositif de capture de coup de foudre, lorsque ledit programme est exécuté sur un ordinateur.

La présente invention concerne également un programme informatique tel que celui précité, mis en oeuvre sur un support lisible par ordinateur.

La présente invention concerne enfin également un support pouvant être lu par un ordinateur et sur lequel est enregistré un programme informatique tel que celui précité.

TECHNIQUE ANTERIEURE

Afin de protéger un bâtiment, une structure, un équipement ou, de manière générale, toute zone de l'espace géographique, contre l'impact direct de la foudre, on met généralement en oeuvre un système de protection, habituellement désigné par le terme « *paratonnerre* », et comprenant notamment les trois éléments principaux suivants :

- un dispositif de capture ;

- un dispositif de descente ;

- une prise de terre.

Un tel système de protection est décrit dans US 6320119.

Le dispositif de capture comprend en général une ou plusieurs tiges ou pointes métalliques, destinées à être dressées vers le ciel et reliées à la terre par l'intermédiaire du dispositif de descente, lequel est formé par un conducteur destiné à conduire le courant de foudre de la tige vers la prise de terre, tandis que la prise de terre est elle-même destinée à répartir le courant de foudre dans le sol.

Un tel dispositif permet ainsi d'écouler directement dans le sol les décharges atmosphériques, en évitant que ces dernières ne traversent la zone à protéger, ce qui pourrait détériorer ou détruire cette dernière.

Le fonctionnement d'un tel système de l'art antérieur est le suivant.

Il est universellement connu que les nuages orageux sont électrisés. Les éclairs au sol commencent presque toujours au sein du nuage par un phénomène de claquage préliminaire. Après quelques dizaines de millisecondes, ce phénomène engendre une décharge négative fortement ramifiée qui se propage par bonds du nuage vers le sol et que l'on désigne sous l'appellation « *traceur descendant* », ou « *traceur descendant par bonds* ».

Le champ électrique ambiant au sol sous le traceur descendant devient alors très élevé et on observe une ou plusieurs décharges ascendantes positives, appelées « *traceurs ascendants* », qui se forment durant la phase dite d'attachement. Ces traceurs ascendants se développent jusqu'à ce qu'au moins l'un d'eux intercepte le traceur descendant en un point généralement situé à quelques dizaines de mètres du sol. Un arc en retour se produit alors, consistant en une intense vague positive d'ionisation qui remonte le traceur descendant, neutralisant ainsi une partie de la charge du nuage.

L'efficacité de protection d'un paratonnerre est ainsi directement liée à la capacité de son dispositif de capture à générer de façon « *précoce* » un traceur ascendant qui viendra se joindre au traceur descendant pour former l'éclair, et ce avant tout autre traceur ascendant issu de la zone à protéger. Cette efficacité de protection, qui dépend d'un grand nombre de critères et en particulier de la hauteur et de la forme du paratonnerre, ainsi que de la présence ou non d'un dispositif d'amorçage (paratonnerre à dispositif d'amorçage, ou PDA), est généralement évaluée en déterminant un périmètre de sécurité au sol, s'étendant autour du paratonnerre, et au sein duquel ne peut se former un traceur ascendant susceptible d'intercepter, avant le traceur ascendant issu du paratonnerre, le traceur descendant. De façon générale,

**EP 1 794 858 B1**

on caractérise ce périmètre de sécurité par la distance latérale au sol séparant le paratonnerre de la frontière du périmètre de sécurité.

Un modèle empirique, appelé modèle électrogéométrique (MEG), établi depuis quelques décennies, permet de déterminer, en fonction de la hauteur des dispositifs de capture et de l'intensité du courant de foudre, la distance latérale de protection, qui correspond à l'étendue de la zone de protection conférée par le paratonnerre.

Ce modèle électrogéométrique est prescrit dans la plupart, voire la totalité, des normes internationales relatives à la protection contre la foudre.

Il s'avère cependant que ce modèle électrogéométrique, malgré sa grande simplicité, est insuffisant et limité.

En effet, il a été maintes fois constaté que des installations ont été foudroyées alors qu'elles se trouvaient, selon le modèle électragéométrique, sous la protection d'un paratonnerre.

Il existe donc un risque, en procédant à l'installation d'un paratonnerre selon les prescriptions du modèle électrogéométrique, de ne pas véritablement protéger au moins une partie de la zone que l'on souhaite prémunir d'un impact direct de la foudre.

D'autres méthodes ont depuis été développés, et notamment des méthodes basées sur des modèles mathématiques appelés « *modèles de progression de traceur* ». Les modèles de progression de traceur connus ne permettent cependant pas d'obtenir des résultats précis de façon simple et fiable, de sorte qu'ils ne sont pas retenus dans les normes internationales.

EXPOSE DE L'INVENTION

L'objet assigné à l'invention vise en conséquence à porter remède aux différents inconvénients de l'art antérieur mentionnés précédemment, et à proposer une nouvelle méthode d'évaluation de l'étendue de la zone de protection conférée par au moins un dispositif de capture de coup de foudre, qui permette d'obtenir des résultats plus précis et plus fiables.

Un autre objet de l'invention vise à proposer une nouvelle méthode d'évaluation de l'étendue de la zone de protection conférée par au moins un dispositif de capture de coup de foudre, qui repose sur une modélisation fine des phénomènes physiques régissant la formation et le développement des traceurs ascendant et descendant.

Un autre objet de invention vise à proposer une nouvelle méthode d'évaluation de l'étendue de la zone de protection conférée par au moins un dispositif de capture de coup de foudre qui se prête particulièrement bien à une mise en oeuvre automatisée par ordinateur.

Un autre objet de l'invention vise à proposer une nouvelle méthode d'évaluation de l'étendue de la zone de protection conférée par au moins un dispositif de capture de coup de foudre qui soit applicable, avec une bonne fiabilité, à des cas réels.

Les objets assignés à l'invention sont atteint à l'aide d'une méthode d'évaluation de l'étendue de la zone de protection conférée par au moins un dispositif de capture de coup de foudre, ledit coup de foudre étant formé par la propagation et la jonction d'un traceur ascendant et d'un traceur descendant, ladite méthode étant basée sur un modèle de progression de traceur dans lequel chaque traceur est modélisé par une succession de segments chargés électriquement, chaque segment s'étendant, dans le sens de sa propagation, entre une extrémité arrière et une extrémité avant, ladite méthode étant **caractérisée en ce qu'**elle comprend au moins une étape de vérification de la jonction entre le traceur descendant et le traceur ascendant dans laquelle on calcule le champ électrique le long d'une ligne fictive joignant le traceur descendant et le traceur ascendant et on vérifie que ledit champ électrique est, partout sur ladite ligne fictive, supérieur au champ électrique minimal nécessaire à la propagation du traceur ascendant.

Les objets assignés à l'invention sont également atteints à l'aide d'un programme informatique comprenant un moyen de code de programme informatique adapté pour exécuter les étapes d'une méthode conforme à l'invention, lorsque ledit programme est exécuté sur un ordinateur.

Les objets assignés à l'invention sont également atteints à l'aide d'un programme informatique conforme à l'invention mis en oeuvre sur un support lisible par un ordinateur.

Les objets assignés à l'invention sont également atteints à l'aide d'un support pouvant être lu par un ordinateur et sur lequel est enregistré un programme conforme à l'invention.

DESCRIPTIF SOMMAIRE DES DESSINS

D'autres objets et avantages de l'invention apparaîtront plus en détails à la lecture de la description qui suit, en référence aux dessins annexés, donnés à titre purement illustratif et non limitatif, dans lesquels :

- La figure 1 illustre, selon une vue schématique latérale, la propagation d'un traceur descendant issu d'un nuage et la propagation d'un traceur ascendant issu d'un dispositif de capture posé sur le sol.

- La figure 2 illustre, selon une vue schématique latérale, la propagation d'un traceur descendant à partir d'un nuage.

- La figure 3 illustre, de façon schématique, la formation d'une zone de prédécharge ascendante (zone « *streamer* ») au niveau du sommet d'un dispositif de capture, formé en l'occurrence par une pointe.

- La figure 4 illustre la formation d'un traceur ascendant consécutive à la formation de la zone de prédécharge ascendante illustrée à la figure 3.

- La figure 5 illustre, selon une vue schématique, une portion de traceur et son image relativement au sol, lequel est considéré comme une surface plane infiniment conductrice.

- La figure 6 illustre, selon une vue schématique, une comparaison qualitative entre le volume de collection d'un dispositif de capture tel qu'évalué par la méthode conforme à l'invention, et le volume de collection tel qu'évalué par une méthode de l'art antérieur.

- La figure 7 illustre, selon une vue schématique en perspective, un bâtiment pourvu à son sommet d'un dispositif de capture, ledit bâtiment reposant sur le sol et étant surplombé par un nuage orageux.

- La figure 8 illustre, selon une vue schématique en perspective, un phénomène de compétition entre quatre traceurs ascendants relativement à un unique traceur descendant.

- La figure 9 illustre, de façon schématique, un phénomène de compétition entre deux dispositifs de capture, les valeurs portées en abscisse correspondant à la distance latérale en mètres, tandis que les valeurs en ordonnée correspondent à l'altitude en mètres.

- La figure 10 illustre, selon une vue schématique, la compétition entre deux traceurs ascendants issus de deux dispositifs de capture respectifs, en regard d'un traceur descendant oblique, les valeurs portées en abscisse correspondant à la distance latérale en mètres, tandis que les valeurs en ordonnée correspondant à l'altitude en mètres.

- La figure 11 représente la variation de la distance de protection en fonction de la hauteur du dispositif de capture, pour des intensités de courant de foudre variables ainsi que des rapports de vitesse des traceurs descendant et ascendant variables.

- La figure 12 représente une série de courbes obtenues soit par le modèle électrogéométrique soit par la méthode objet de la présente invention, et pour des intensités de courant de foudre variables, lesdites courbes illustrant la variation de la distance latérale de sécurité (en ordonnée) en fonction de la hauteur du dispositif de capture (en abscisse).

- La figure 13 illustre, pour différents rapports de vitesse des traceurs ascendant et descendant, le volume de collection d'un dispositif de capture haut de huit mètres, l'altitude étant portée en ordonnée tandis que la distance latérale est portée en abscisse.

- La figure 14 illustre la variation du rayon d'attraction (en ordonnée) d'un dispositif de capture de trente mètres de haut en fonction de l'intensité du courant de foudre, selon le modèle électrogéométrique et selon la méthode conforme à l'invention.

- Les figures 15 à 21 présentent un organigramme d'un algorithme de calcul numérique basé sur la méthode conforme à l'invention.

MEILLEURE MANIERE DE REALISER L'INVENTION

L'invention concerne une méthode d'évaluation de l'étendue de la zone de protection conférée par au moins un dispositif de capture 1, 1A, 1B, 1C de coup de foudre.

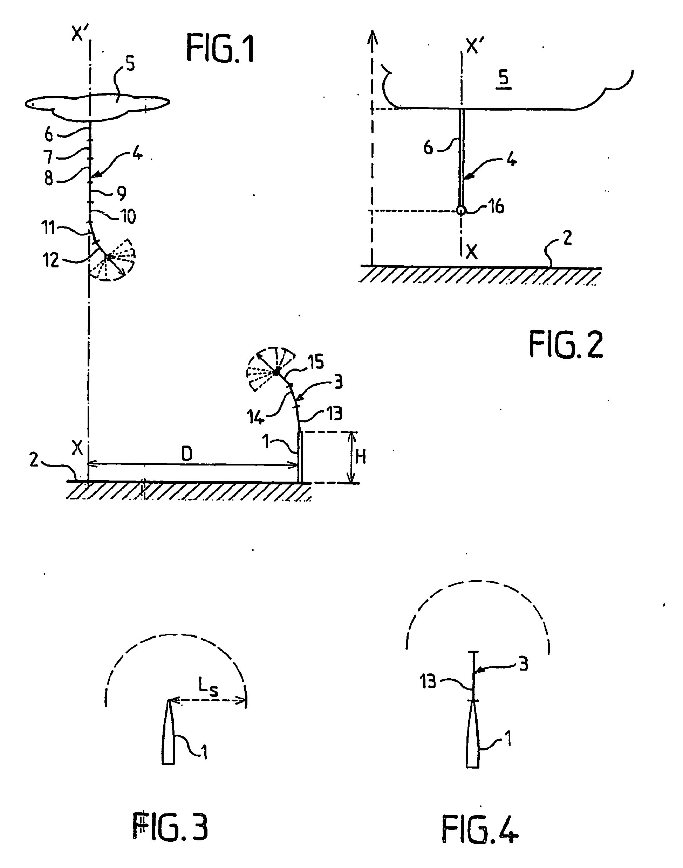

En particulier, la méthode conforme à l'invention permet de déterminer la distance latérale de protection D conférée par un ou plusieurs dispositifs de capture 1, 1A, 1B, 1C. Tel que cela est représenté à la figure 1, la distance latérale de protection D correspond à la distance maximale, mesurée au niveau du sol 2, qui marque la frontière d'un périmètre de sécurité autour du dispositif de capture 1, périmètre au sein duquel tout objet, personne, bâtiment, structure ou équipement est placé sous la protection du dispositif de capture 1. En d'autres termes, la distance latérale de sécurité D, qui est bien connue en tant que telle de l'homme du métier, correspond au rayon d'un disque centré sur le dispositif de capture et au sein duquel tout impact direct de foudre est exclu, à l'unique exception des impacts localisés exclusivement sur le dispositif de capture 1.

La méthode conforme à l'invention pourra être mise en oeuvre quels que soient le nombre, la localisation dans l'espace et la nature du ou des dispositifs de capture 1, 1A, 1 B, 1C de coup de foudre.

En particulier, la méthode conforme à l'invention pourrait être appliquée à des paratonnerres à tige simple (PTS) ou à dispositif d'amorçage (PDA), à des dispositifs multi-pointes ou encore à des cages maillées.

La méthode pourra être appliquée à un ensemble composé de plusieurs dispositifs de capture de coup de foudre, lesdits dispositifs étant positionnés, par exemple de façon tridimensionnelle, les uns relativement aux autres.

La méthode conforme à l'invention est donc avantageusement une méthode tridimensionnelle. Bien entendu, la méthode conforme à l'invention peut être appliquée à des situations bidimensionnelles, sans pour autant que l'on sorte du cadre de l'invention.

Le coup de foudre destiné à être capturé par le dispositif de capture 1, 1A, 1B, 1C est formé par la propagation et la jonction d'un traceur ascendant 3, 3A, 3B, 3C et d'un traceur descendant 4, ledit traceur ascendant 3, 3A, 3B, 3C étant amorcé et se propageant à partir du dispositif de capture 1, tandis que le traceur descendant 4 prend naissance à la base d'un nuage orageux 5.

L'interception du traceur descendant 4 par le traceur ascendant 3, et la jonction desdits traceurs 3, 4, forment l'éclair et le coup de foudre. La phénoménologie du coup de foudre est à ce niveau bien connue de l'homme du métier, et ne sera donc pas explicitée plus en détails.

On notera toutefois que la distance latérale de sécurité D peut correspondre à la distance maximale, mesurée au sol, séparant les dispositifs de capture 1 de l'axe X-X' selon lequel s'étend, à sa naissance, le traceur descendant 4 (cf. figure 1) susceptible d'être intercepté par le traceur ascendant 3 issu du dispositif de capture 1.

La méthode conforme à l'invention est basée sur un modèle de progression de traceur. Les modèles de progression de traceur sont bien connus de l'homme du métier, et ne seront donc pas explicités plus en détails dans ce qui suit. On rappellera seulement que dans un tel modèle de progression de traceur, chaque traceur 3, 3A, 38, 3C, 4 est modélisé par une succession de segments 6, 7, 8, 9, 10, 11, 12, 13, 14, 15 chargés électriquement, chaque segment 6, 7, 8, 9, 10, 11, 12, 13, 14, 15 s'étendant, dans le sens de sa propagation, entre une extrémité arrière et une extrémité avant, l'extrémité avant d'un segment donné correspondant à l'extrémité arrière d'un autre segment qui lui est consécutif.

De façon classique, chaque segment est un segment de droite d'épaisseur nulle et de longueur constante, ladite longueur de segment correspondant à un pas de traceur.

De façon classique, les segments 13, 14. 15 correspondant au traceur ascendant 3 sont porteurs d'une charge électrique positive, tandis que les segments 6, 7, 8, 9, 10, 11, 12 correspondant au traceur descendant 4 sont porteurs d'une charge électrique négative.

De façon préférentielle, le sol 2 est considéré comme une surface plane infiniment conductrice de manière à pouvoir prendre en compte l'influence des charges images, comme on le verra par la suite.

Avantageusement, la méthode conforme à l'invention comprend une étape de mise en application d'un critère d'amorçage du traceur ascendant 3.

Dans cette étape, un calcul du champ seuil, c'est-à-dire du champ électrique minimal nécessaire à la propagation du traceur ascendant 3, est effectué, de façon à déterminer ledit champ seuil en fonction de la hauteur H du dispositif de capture 1 relativement au sol 2. En d'autres termes, dès que le champ électrique atmosphérique ambiant atteint ou dépasse le champ seuil, le traceur ascendant 3 pourra prendre naissance.

Conformément à l'invention, lorsque la hauteur H du dispositif de capture, formé de préférence par une tige métallique pointue, est sensiblement inférieure à six mètres, le critère de Rizk est appliqué, de sorte que le champ seuil $E_R$, exprimé en kV/m, est obtenu par la formule suivante :

$$E_R \approx \frac{1556}{H + 3{,}89}$$

Dans le cas où la hauteur du dispositif de capture 1 est sensiblement supérieure à six mètres, on applique alors, conformément à l'invention, le critère de Lalande. Selon ce critère, le champ seuil $E_L$, exprimé en kV/m, est obtenu par la formule suivante :

$$E_L = \frac{240}{1+0,1H} + 12$$

Dans le cadre de la méthode conforme à l'invention, on considère ainsi qu'une zone de prédécharge ascendante (ou zone « *streamer* ») demi-sphérique de rayon prédéterminé $L_S$, se forme au niveau de l'extrémité supérieure du dispositif de capture 1, c'est-à-dire au niveau de la pointe de la tige lorsque le dispositif de capture 1 est un paratonnerre. On notera au passage que de façon préférentielle, on considère ici que le rayon de courbure de la pointe du dispositif de capture est très petit.

Cette zone « *streamer* », qui porte une charge électrique répartie de valeur Q, s'étend du sommet de la tige du paratonnerre jusqu'à la distance $L_S$ où l'intensité du champ électrique atteint une valeur $E_S$ (cf. figure 3). Lorsque le champ $E_S$ atteint la valeur seuil, à savoir $E_R$ ou $E_L$ selon la géométrie du dispositif de capture 1, un traceur ascendant 3 est amorcé, c'est-à-dire qu'un premier segment 13 s'étend à partir du dispositif de capture 1 (cf. figure 1). Ledit segment 13 génère lui-même la formation d'une nouvelle zone « *streamer* », ce qui engendrera la naissance d'un deuxième segment 14 consécutif au premier et ainsi de suite.

Une telle modélisation a déjà été décrite dans son principe général dans l'art antérieur, de sorte qu'il est inutile d'approfondir plus avant ce point. Avantageusement, dans le cadre de la méthode conforme à l'invention, on fixera, pour le traceur descendant, le champ $E_S$ à une valeur seuil sensiblement égale à 1100 kV/m. Pour le traceur ascendant, le champ $E_S$ sera fixée à une valeur seuil sensiblement égale à 500 kV/m.

Avantageusement, la méthode conforme à l'invention comprend une étape de modélisation de la charge électrique des traceurs, dans laquelle on associe à chaque segment 6, 7, 8, 9, 10, 11, 12, 13, 14, 15 d'une part une distribution linéique de charge λ, et d'autre part une charge ponctuelle 16, de valeur Q', située à l'extrémité avant du segment concerné (cf. figure 2).

Si l'on considère que la zone « *streamer* » qui se développe au sommet du dispositif de capture (cf. figure 3) est assimilé à une demi-sphère de rayon $L_S$, on aboutit alors à la relation suivante : $E_s = \dfrac{Q}{2\pi\varepsilon o L_s^2}$ , $E_s$ étant en V/m, εo étant la permittivité absolue du vide.

Lorsque la zone « *streamer* » avance d'un pas (illustré à la figure 4), la charge Q de la zone « *streamer* » se trouve répartie sur un segment de longueur $L_s$. Dès lors, la formule précédente s'écrit :

$$E_S = \frac{\lambda L_s}{2\pi\varepsilon o L_s^2} = \frac{\lambda}{2\pi\varepsilon o L_s} \ \ (V/m)$$

La valeur Q' de la charge ponctuelle 16 sera donc :

$$Q' = Q = \lambda L_s = 2\pi\varepsilon o \, L_s^2 E_s = \lambda^2 / (2\pi\varepsilon o E_s)$$

Avantageusement, pour chaque segment 6, 7, 8, 9, 10, 11, 12, 13, 14, 15, la distribution linéique de charge λ est sensiblement uniforme, tandis que la valeur de la charge ponctuelle 16 est sensiblement constante.

Conformément à l'invention, on combine la formule précédente avec la relation suivante, proposée par Petrov et Waters :

$\lambda_d = 0,43.10^{-6} I^{2/3}$, où I est l'intensité du courant de foudre,

tout en fixant la valeur de $E_s$ à 1100 kV/m, de façon à aboutir à une valeur $Q_d$ de charge ponctuelle pour le traceur descendant :

$$Q_d = 3,33.10^{-9} \, I^{4/3}$$

où 1 est l'intensité du courant de foudre (en kA).

Pour ce qui est du traceur ascendant, on considérera, dans le cadre de la méthode conforme à l'invention, qu'il présente une densité de charge $\lambda_{amin}$ minimale mais nécessaire pour l'amorçage et la formation du traceur.

Cette valeur sera de préférence comprise entre 20 et 70 $\mu$C/m, et est de préférence sensiblement égale à 50 $\mu$C/m.

Quant à la charge ponctuelle $Q_a$ correspondant au traceur ascendant, elle est obtenue à l'aide de la formule suivante :

$$Q_a = \lambda_{amin}/(2\pi\varepsilon_0 E_s) \text{ avec } E_s = 500\text{kV/m}$$

On notera que le modèle original de répartition de la charge présenté précédemment est indépendant des autres caractéristiques de la méthode conforme à l'invention, et peut constituer une invention en tant que telle. Avantageusement, la méthode conforme à l'invention comprend une étape de modélisation de la vitesse des traceurs ascendants 3, 3A, 3B, 3C et descendant 4, étape dans laquelle on considère que lesdits traceurs ascendant et descendant se propagent à vitesse constante, dès lors que le traceur ascendant 3, 3A, 3B, 3C est amorcé à partir du dispositif de capture correspondant 1,1A, 1B, 1C.

De façon préférentielle, les vitesses de propagation des traceurs ascendant $V_{asc}$ et descendant $V_{des}$ sont prises en considération dans la méthode conforme à l'invention en introduisant le rapport de vitesse $R_v$ :

$$\frac{V_{des}}{V_{asc}} = \frac{L_{des}/\Delta t}{L_{asc}/\Delta t} = L_{des}/L_{asc} = R_v$$

$L_{dea}$ et $L_{ese}$ représentant respectivement les pas de propagation des traceurs descendant 4 et ascendant 3, lesdits pas correspondant à la longueur d'un segment unitaire 6, 7, 8, 9, 10, 11, 12, 13, 14, 15.

De façon préférentielle, la vitesse de propagation $V_{des}$ du traceur descendant 4 est considérée comme constante. En d'autres termes, lors de la mise en oeuvre de la méthode conforme à l'invention, le pas du traceur descendant est préférentiellement fixé, tandis que le pas du traceur ascendant 3 est à déterminer.

Avantageusement, le rapport $R_v$ de la vitesse de propagation du traceur descendant 4 sur la vitesse de propagation du traceur ascendant 3 est sensiblement compris entre 0,1 et 8, et est préférentiellement sensiblement compris entre 0,5 et 4.

Il s'avère en effet que cette dernière plage de valeurs permet de s'approcher au mieux des conditions rencontrées dans la réalité, et permet d'obtenir des résultats plus fiables.

Avantageusement, la méthode conforme à l'invention comprend une étape de modélisation du retard à l'amorçage $\Delta t$ du dispositif de capture 1, étape dans laquelle on considère que lorsque le champ électrique minimal nécessaire à la propagation du traceur ascendant 3 est atteint (ou dépassé), le traceur ascendant 3 ne sera pas amorcé tant que le traceur descendant 4 n'a pas progressé d'une distance égale au produit du retard à l'amorçage $\Delta t$ et de la vitesse $V_{des}$ du traceur descendant 4.

Cette étape de modélisation du retard à l'amorçage, tout comme d'ailleurs l'étape de modélisation de la vitesse décrite précédemment, est en elle-même indépendante du reste de l'invention et peut à ce titre constituer une invention distincte.

Avantageusement, la méthode conforme à l'invention comprend une étape de calcul du potentiel et du champ électriques.

Le déroulement de cette étape diffère selon que le dispositif de capture 1, 1A, 1B, 1C est posé directement sur le sol 2 (cf. figure 1) ou repose sur une superstructure correspondante 17, ladite superstructure s'élevant à partir du sol 2 de façon à présenter une altitude non nulle, et de préférence relativement élevée.

Par « *superstructure* », on désigne ici tout bâtiment, qu'il soit destiné à l'habitation ou à une activité industrielle ou commerciale, ou tout édifice naturel ou artificiel, voire encore tout équipement, de quelque nature que ce soit, que l'on souhaiterait protéger d'un impact direct de foudre.

Par construction, une telle superstructure 17 présentera des singularités géométriques, c'est-à-dire des zones de changement brusque de géométrie, telles que des arêtes ou des coins, lesdites singularités géométriques étant propices à la génération de traceurs ascendants.

En premier lieu, on va détailler une manière préférentielle de calculer le potentiel et le champ dans le cas d'un dispositif de capture 1, 1A, 1B, 1C formé par une tige pointue, reposant sur le sol 2. Comme évoqué précédemment, le sol 2 est considéré co mme une surface plane infiniment conductrice, de manière à pouvoir prendre en compte l'influence des charges images.

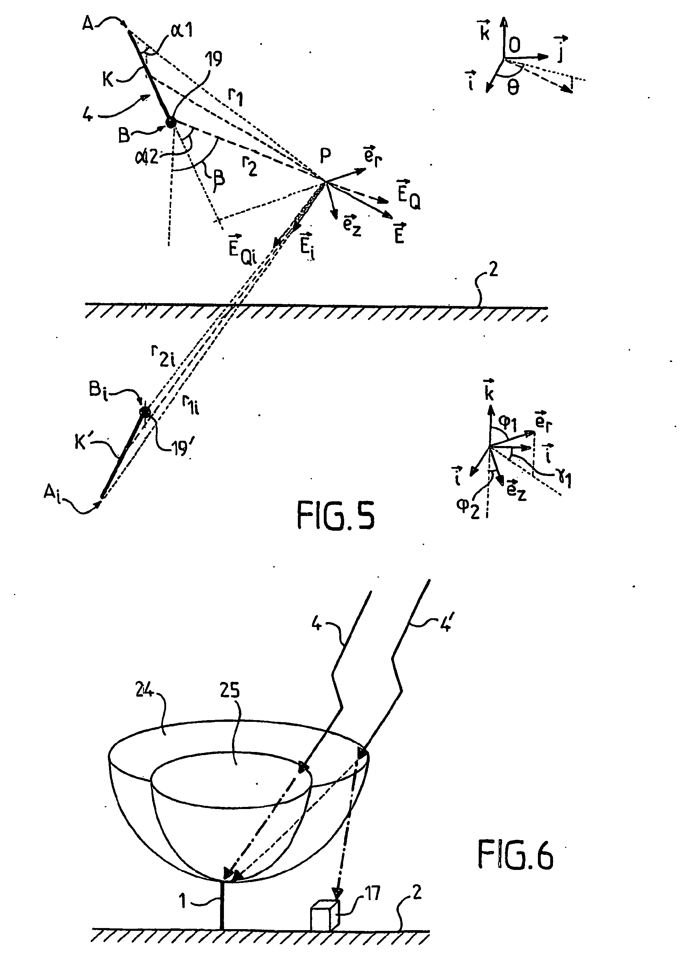

Tel que cela est illustré à la figure 5, le champ et le potentiel sont de préférence calculés dans un repère local $(o, \vec{e}_r, \vec{e}_z)$ puis exprimés dans le repère global $(o, \vec{i}, \vec{j}, \vec{k})$.

Sur la figure 6 est ainsi représenté un segment K de traceur s'étendant d'une extrémité arrière A à une extrémité avant B. Sur cette même figure est représenté le segment image K' relativement au sol 2.

Le segment K présente une charge linéique $\lambda$ et une charge ponctuelle 19 située à l'extrémité avant B et présentant une valeur de charge Q.

Quant au segment image K' il présente une charge linéique $-\lambda$ et une charge ponctuelle 19' dont la valeur est -Q.

Par conséquent, et conformément à la disposition géométrique illustrée à la figure 5, le potentiel créé en un point P (centre du repère local $(o, \vec{e}_r, \vec{e}_z)$) par la charge linéique et son image est obtenu par la formule suivante :

$$V_K(P) = \frac{\lambda}{4\pi\varepsilon} \ln\left[ \frac{a+c}{a-c} \times \frac{a_i -}{a_i +} \right]$$

où la longueur du segment K est égale à 2c, tandis que r1 + r2 = 2a et $r1_i + r2_i = 2a_i$,

Quant au potentiel au point P dû à la charge ponctuelle 19 située en tête du traceur K et à son image 19', il est donné par l'expression :

$$V_Q(P) = \frac{Q}{4\pi\varepsilon_0}\left(\frac{1}{r_2} - \frac{1}{r_{2i}}\right)$$

Par conséquent, le potentiel total $V_T$ au point P dû à tous les segments de traceurs, à la charge ponctuelle ainsi qu'à leurs images respectives s'écrit :

$$V_T(P) = V_Q(P) + \sum_K V_k(P)$$

De façon préférentielle, selon la méthode conforme à l'invention, on calcule les composantes tangentielles et normales du champ dû à un segment K de traceur, ainsi que le champ dû à la charge ponctuelle et à son image.

Les composantes tangentielles s'écrivent de la façon suivante :

$$\vec{E}_z = \frac{\lambda}{4\pi\epsilon_0}\left(\frac{1}{r_2} - \frac{1}{r_1}\right)\vec{e}_z$$

$$\vec{E}_{zi} = \frac{-\lambda}{4\pi\epsilon_0}\left(\frac{1}{r_{2i}} - \frac{1}{r_{1i}}\right)\vec{e}_{zi}$$

Les composantes normales s'écrivent quant à elles ainsi :

$$\vec{E}_r = \frac{\lambda}{4\pi\epsilon_0}\left[\frac{\tan\left(\alpha_1/2\right)}{r_1} - \frac{\tan\left(\alpha_2/2\right)}{r_2}\right]\vec{e}_r$$

Les composantes normales et tangentielles s'expriment de la façon suivante, dans le repère global $(o, \vec{i}, \vec{j}, \vec{k})$:

$$\vec{E}_i = \sin(\varphi 1)\cos(\gamma 1)\vec{e}_r + \sin(\varphi 1i)\cos(\gamma 1i)\vec{e}_{ri} + \sin(\varphi 2)\cos(\gamma 2)\vec{e}_z + \sin(\varphi 2i)\cos(\gamma 2i)\vec{e}_{zi}$$

$$\vec{E}_j = \sin(\varphi 1)\sin(\gamma 1)\vec{e}_r + \sin(\varphi 1i)\sin(\gamma 1i)\vec{e}_{ri} + \sin(\varphi 2)\sin(\gamma 2)\vec{e}_z + \sin(\varphi 2i)\sin(\gamma 2i)\vec{e}_{zi}$$

$$\vec{E}_k = \cos(\varphi 1)\vec{e}_r - \cos(\varphi 1i)\vec{e}_{ri} - \cos(\varphi 2)\vec{e}_z + \cos(\varphi 2i)\vec{e}_{zi} \;.$$

$$\vec{E}_K(P) = \vec{E}_i + \vec{E}_j + \vec{E}_k$$

Le champ dû à la charge ponctuelle et à son image s'écrit :

$$\vec{E}_Q = \frac{Q}{4\pi \in_0 r_2^2}\left(\cos(\theta)\sin(\beta)\vec{i} + \sin(\theta)\sin(\beta)\vec{j} - \cos(\beta)\vec{k}\right)$$

$$\vec{E}_{iQ} = \frac{-Q}{4\pi \in_0 r_2^2}\left(\cos(\theta_i)\sin(\beta_i)\vec{i} + \sin(\theta_i)\sin(\beta_i)\vec{j} + \cos(\beta_i)\vec{k}\right)$$

Donc:

$$\vec{E}_Q(P) = \vec{E}_Q + \vec{E}_{iQ}$$

Le champ électrique total au point P dû au traceur s'écrit donc :

$$\vec{E}_T(P) = \vec{E}_Q(P) + \sum_k \vec{E}_k(P)$$

Dans le cas où le dispositif de capture 1, 1A, 1B, 1C est disposé sur une superstructure 17 en élévation au-dessus du sol 2, le potentiel est déterminé par la résolution de l'équation de Laplace :

$$-\nabla(\varepsilon_0 \nabla V) = 0$$

La résolution de l'équation de Laplace se fera de préférence avec la méthode des éléments finis. Par exemple, le calcul pourra être effectué grâce au logiciel FEMLAB commercialisé par la société COMSOL.

L'homme du métier saura adapter le programme et la méthode, en choisissant en particulier un domaine de résolution et en imposant des conditions aux limites.

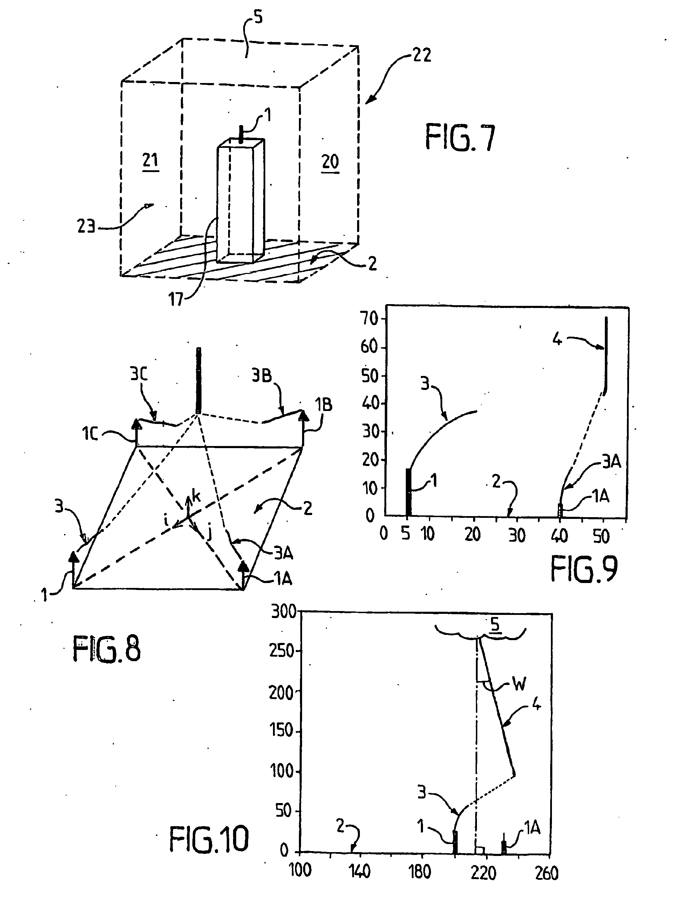

Dans le cadre de l'exemple représenté à la figure 7, une structure élevée 17, à savoir par exemple un immeuble en béton, est protégé par un dispositif de capture 1, constitué en l'occurrence par une tige métallique. Cette superstructure 17 se trouve à l'intérieur d'un domaine délimité par six plans formant un volume fictif parallépipédique.

Dans le cadre de la méthode, on suppose que le plan inférieur, qui représente le sol 2 et à partir duquel s'élève le bâtiment 17, est porté à un potentiel nul, tandis que le plan supérieur opposé, qui représente la base d'un nuage orageux 5, présente un potentiel $V_n$ (conditions de type Dirichlet).

On suppose de préférence que les autres plans 20, 21, 22, 23 sont des surfaces isolées, ce qui se traduit

mathématiquement par : $n\nabla V = 0$.

Ainsi, la répartition des lignes de champ ne sera pas perturbée par la présence de ces plans.

L'immeuble ainsi que la tige sont aussi portés au potentiel V=0.

De façon préférentielle, on effectuera un maillage numérique adaptatif en l'affinant aux endroits où le potentiel comporte de forts gradients (autour des aspérités, du genre coins ou arêtes) et en veillant à ce qu'il ne comporte pas de variations brusques.

Il ne reste donc plus qu'à résoudre l'équation de Laplace dans le domaine grâce au module de résolution (solveur) d'un programme de calcul par éléments finis, tel que le programme FEMLAB, en imposant la précision souhaitée, conformément aux connaissances générales de l'homme du métier. Le champ électrique ainsi que le potentiel en n'importe quel point du domaine seront ainsi calculés.

Avantageusement, ia méthode conforme à l'invention comprend une étape de détermination de la direction de propagation du traceur ascendant 3 et du traceur descendant 4.

Dans cette étape, de façon préférentielle, on calcule le champ électrique en plusieurs points à égale distance de la tête du segment concerné, tel que cela est représenté à la figure 1. La direction de propagation du traceur concerné correspond alors à la direction du point, vu de l'extrémité avant du segment, pour lequel le champ électrique est maximal.

Chaque traceur avance ainsi par pas en direction du point pour lequel le champ est maximal.

Selon une caractéristique importante de l'invention, la méthode comprend une étape de vérification de la jonction entre le traceur descendant 4 et le traceur ascendant 3, étape dans laquelle on calcule le champ électrique le long d'une ligne fictive joignant le traceur descendant 4 et le traceur ascendant 3 et on vérifie que ledit champ électrique est, partout sur ladite ligne fictive, supérieur au champ électrique minimal nécessaire à la propagation du traceur ascendant 3.

De façon préférentielle, ladite ligne fictive est un segment de droite.

L'application de ce critère d'interception, dans le cadre de la méthode conforme à l'invention, est original en lui-même et est indépendant du reste de l'invention, de sorte qu'il peut constituer une invention distincte.

Avantageusement, le champ électrique minimal nécessaire à la propagation du traceur ascendant 3 est compris entre 200 et 800 kV/m, et est de préférence sensiblement égal à 500 kV/m.

Lorsqu'on est en présence de structures élevées, c'est-à-dire de superstructures s'étendant verticalement à partir du sol 2, plusieurs points d'impact de la foudre sont possibles, à savoir notamment sur les coins et les arêtes de chaque superstructure. Lorsqu'un ou plusieurs dispositifs de capture 1, 1A, 1B, 1C sont posés sur la ou les superstructures, ces dernières se trouvent théoriquement protégées et la foudre ne sera capturée que par les dispositifs de capture. Néanmoins, il s'est avéré que malgré la présence de dispositifs de capture 1, 1A, 1B, 1C, ces derniers sont parfois inefficaces puisque la superstructure peut être foudroyée au niveau de ses coins ou de ses arêtes.

Par conséquent, la méthode conforme à l'invention comprend avantageusement une étape de vérification de l'amorçage d'un traceur ascendant 3 à partir de chacune des singularités de la ou des superstructures 17 sur lesquelles repose(nt) le ou les dispositifs de capture 1, 1A, 1B, 1C.

De façon préférentielle, dans le cadre de l'invention, les coins des superstructures seront modélisés par des sphères, et les arêtes par des cylindres, avec bien sûr de faibles rayons de courbure, de sorte que le champ électrique pourra y être déterminé.

Le critère de naissance des traceurs ascendants, décrit précédemment, pourra alors être appliqué et être pris en considération dans la méthode pour calculer la distance latérale de sécurité.

De manière avantageuse, la méthode conforme à l'invention est une méthode numérique, destinée à être programmée pour former un logiciel d'évaluation de l'étendue de la zone de protection conférée par au moins un dispositif de capture de coup de foudre. Le programme informatique conforme à l'invention permet ainsi, à partir du nombre de dispositifs de capture de coup de foudre ainsi que leurs coordonnées (hauteur, position), les dimensions des superstructures à protéger, le temps de retard à l'amorçage des dispositifs de capture, les coordonnées initiales du traceur descendant, la vitesse de propagation du traceur descendant, le rapport de vitesse $R_v$ et l'intensité du courant de foudre, de déterminer la distance latérale de protection, en deux ou trois dimensions, pour une configuration plane ou une configuration quelconque (par exemple composée d'un ou plusieurs bâtiments, en trois dimensions). Le programme ainsi obtenu permet une meilleure protection contre la foudre et une optimisation du nombre de dispositifs de capture.

Ainsi, l'utilisation de la méthode conforme à l'invention permet de combler les lacunes du modèle électrogéométrique, ainsi que celles d'autres méthodes numériques, telle que la méthode du volume de collection.

En particulier, le rayon attractif du volume de collection 24 obtenu par les méthodes de l'art antérieur s'avère plus élevé que le volume de collection 25 obtenu par la méthode conforme à l'invention. Cette différence est accentuée pour des courants élevés. En conséquence, tel que cela est représenté à la figure 6, deux traceurs 4, 4' distants latéralement seront tous deux interceptés par le dispositif de capture 1 selon la méthode du volume de collection de l'art antérieur, alors que selon la méthode conforme à l'invention, l'un des traceurs sera effectivement intercepté par le dispositif de capture 1, tandis que l'autre échappera au volume de collection et frappera la superstructure 17 à protéger.

La méthode conforme à l'invention permet ainsi de mettre en évidence des situations dangereuses, alors que cela était impossible avec les méthodes de l'art antérieur.

De façon avantageuse, le traceur descendant 4 présente, à sa naissance, c'est-à-dire dès son amorçage, une incidence oblique relativement à la direction verticale, c'est-à-dire à la normale relativement au sol 2. Le traceur descendant 4 est ainsi décalé angulairement d'un angle W relativement à la direction verticale, tel que cela est illustré à la figure 10.

Cette figure 10 illustre par ailleurs, tout comme les figures 8 et 9, des exemples de compétition entre différents traceurs ascendants, cette compétition pouvant être parfaitement prise en compte par la méthode conforme à l'invention.

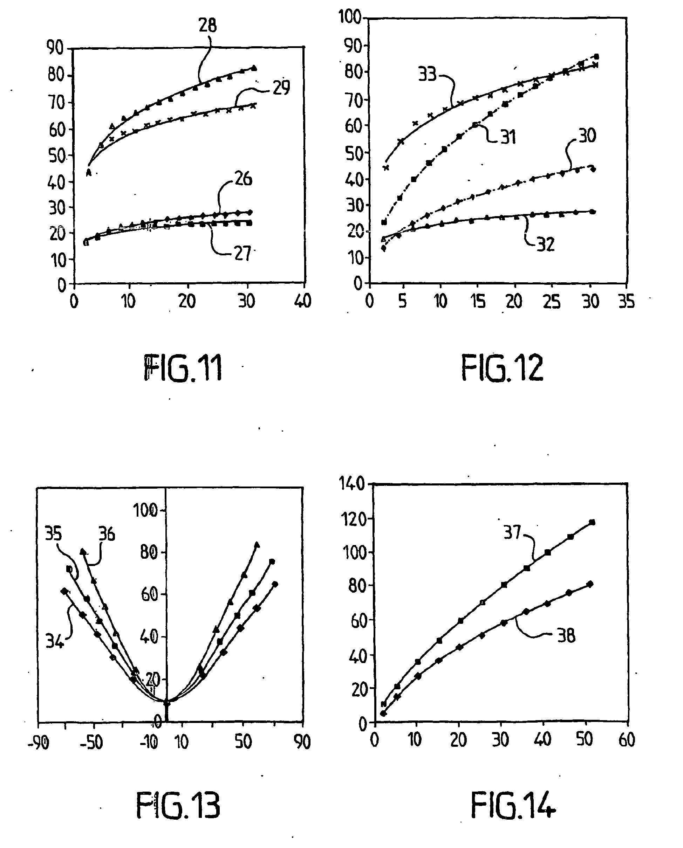

Les figures 11 à 14 présentent quelques résultats obtenus avec la méthode conforme à l'invention.

La figure 11 présente ainsi la variation de la distance latérale de protection (exprimée en mètres en ordonnée) en fonction de la hauteur de la tige formant le dispositif de capture, et ce pour différentes intensités de coup de foudre et différents rapports de vitesse Rv.

La courbe 26 correspond ainsi à une intensité égale à 10kA, tandis que $R_v=1$. La courbe 27 correspond à une intensité égale à 10 kA, tandis que Rv=2. Pour la courbe 28, l'intensité est égale à 50 kA, tandis que Rv =1. Pour la courbe 29, l'intensité est égale à 50 kA tandis que $R_v=2$.

La figure 12 illustre une comparaison des distances latérales calculées selon la méthode conforme à l'invention (Rv étant fixé à 1) et selon le modèle électrogéométrique, pour différentes valeurs d'intensité de courants de foudre. La distance latérale est portée en ordonnée (en mètres) tandis que la hauteur du dispositif de capture, formé en l'occurrence par une tige, est portée en abscisse (en mètres). La courbe 30 correspond ainsi à un résultat obtenu par le modèle électrogéométrique lorsque l'intensité est égale à 10 kA. La courbe 31 correspond à un résultat obtenu par le modèle étectrogéométrique lorsque l'intensité est égale à 50 kA. La courbe 32 correspond à un résultat obtenu par la méthode conforme à l'invention, lorsque l'intensité est égale à 10 kA, tandis que la courbe 33 correspond à un résultat obtenu selon la méthode conforme à l'invention lorsque l'intensité est égale à 50 kA.

La figure 13 illustre le volume de collection obtenu avec un dispositif de capture formé par une tige de huit mètres de haut, pour différentes valeurs d'intensité de courant de foudre et différents rapports de vitesse $R_v$. En abscisse est portée la distance latérale au sol, tandis qu'en ordonnée est portée l'altitude. Les courbes 34, 35, 36 correspondent ainsi respectivement à des rapports $R_v=1/2$, 1 et 2.

La figure 14 présente enfin une comparaison entre le rayon d'attraction du volume de collection calculé avec la méthode conforme à l'invention et avec le modèle d'Ericksson, pour un dispositif de capture formé par une tige de trente mètres de haut. Le rayon d'attraction est porté en ordonnée en mètres, tandis que l'intensité de courant de foudre (en kA) est portée en abscisse. La courbe 37 correspond au résultat obtenu par la méthode conforme à l'invention, tandis que la courbe 38 correspond au résultat obtenu par le modèle d'Ericksson.

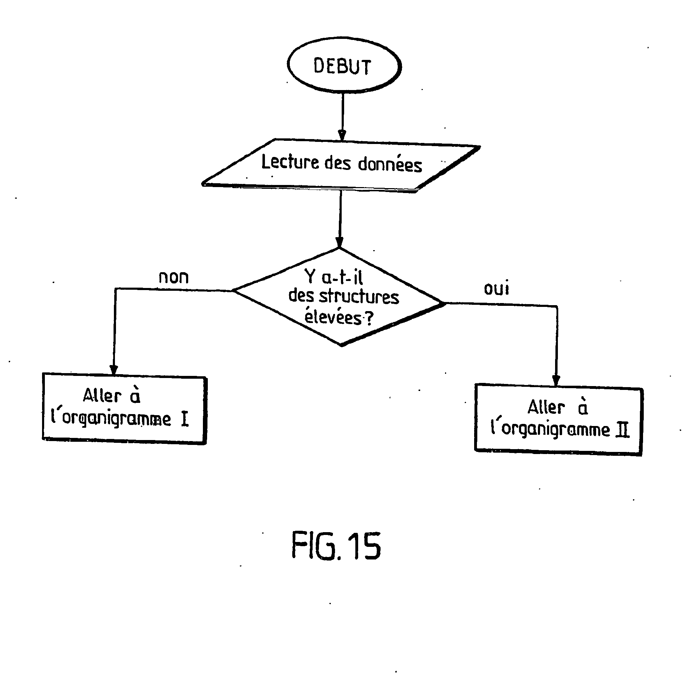

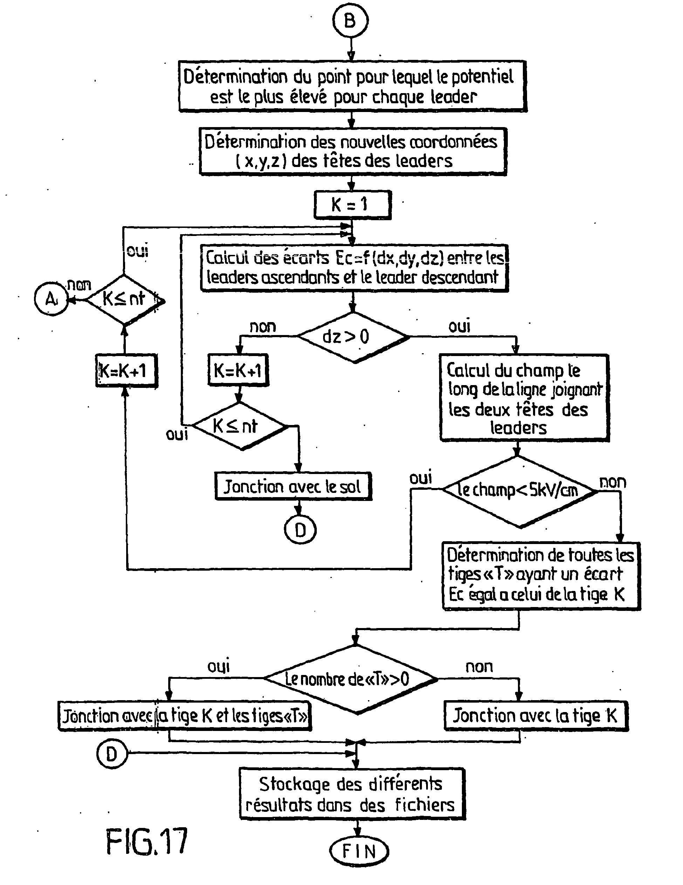

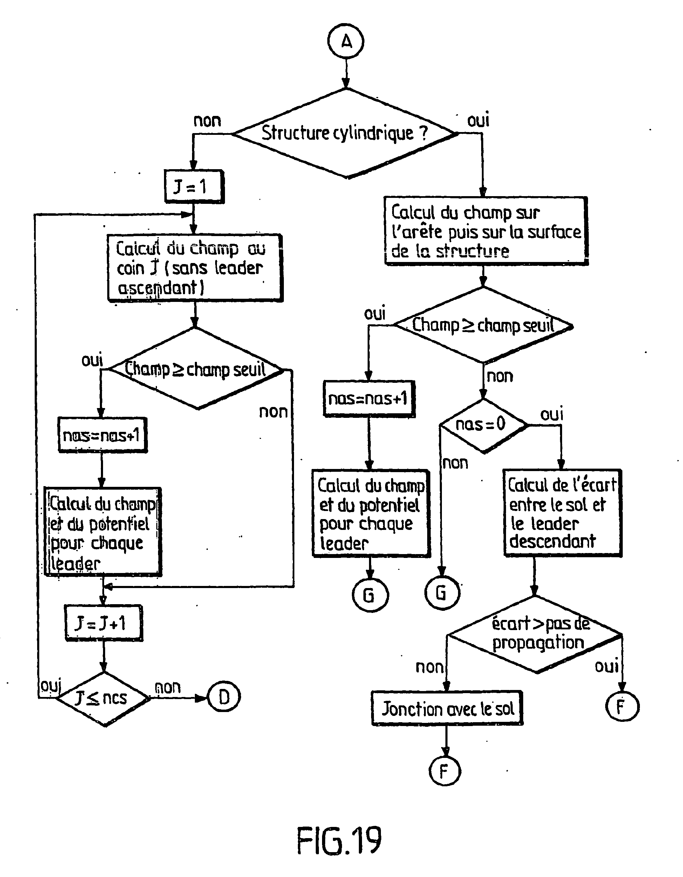

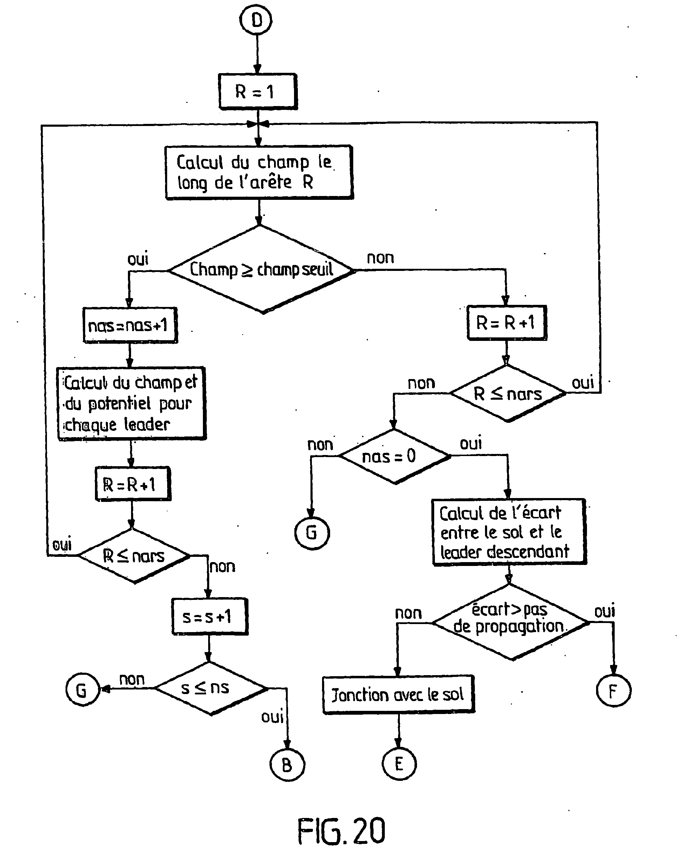

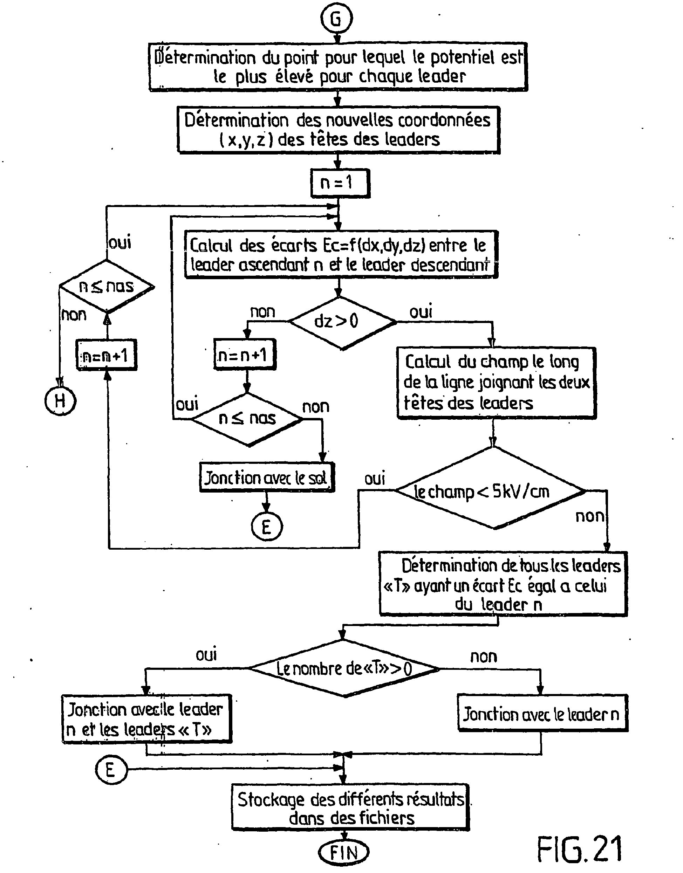

Ainsi qu'on l'a évoqué précédemment, la méthode conforme à l'invention se prête particulièrement bien à une programmation sur ordinateur. Les figures 15 à 21 présentent ainsi un organigramme d'un algorithme de mise en oeuvre de la méthode conforme à l'invention.

Il est à noter que dans le cas où les superstructures présentent des formes sphériques ou cylindriques, et en l'absence de coins et d'arêtes, le calcul du champ se fera sur toute la surface arrondie en appliquant les mêmes critères de naissance et de jonction que ceux évoqués précédemment.

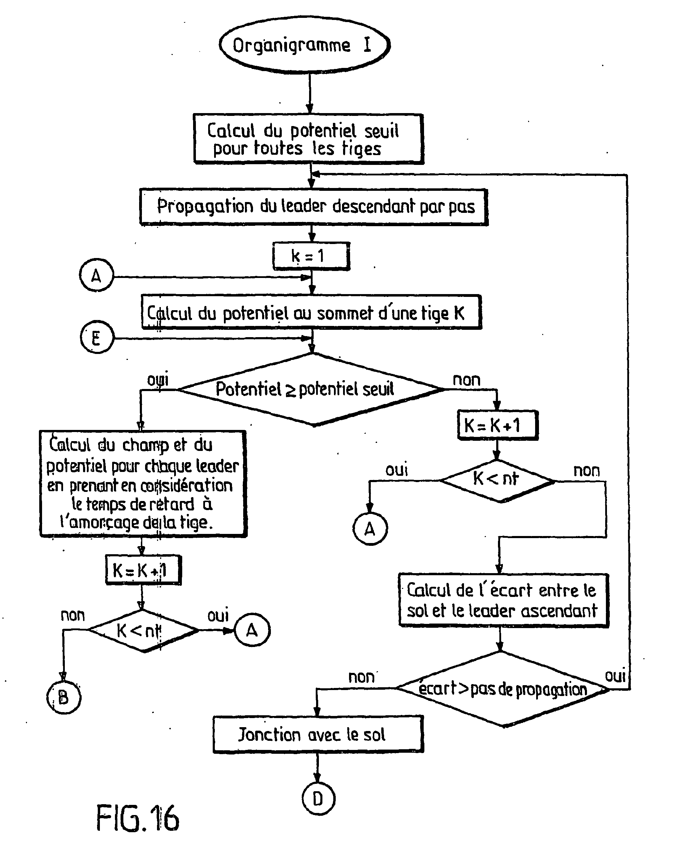

Dans l'organigramme I présenté à la figure 16, nt représente le nombre de tiges, tandis que K correspond au numéro de tige.

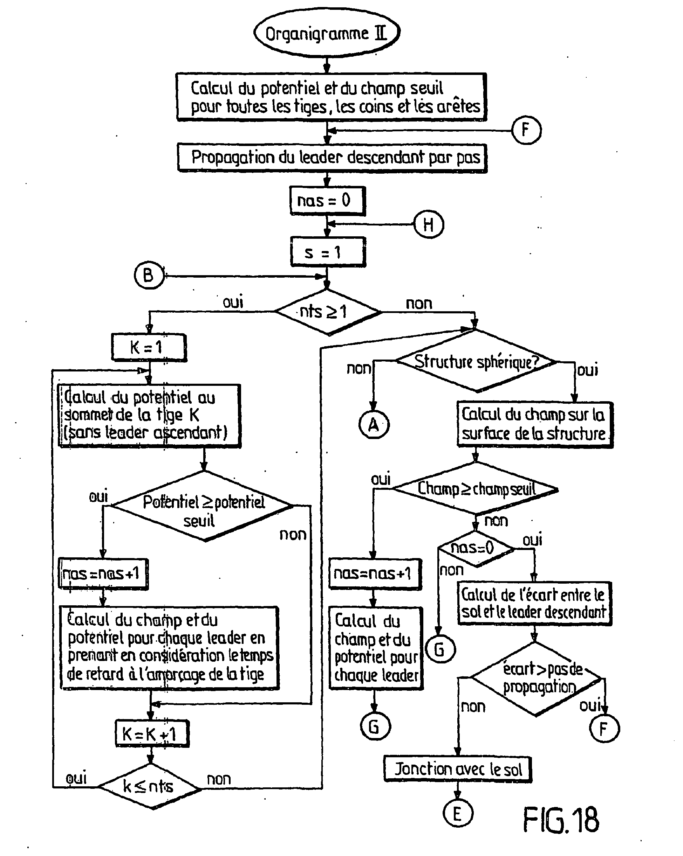

Par ailleurs, dans l'organigramme II illustré à la figure 18, ns correspond au nombre de superstructures, appelées également « *structures élevées* », s est le numéro de la structure, nts est le nombre de tiges de la structure, K est le numéro d'une tige, ncs est le nombre de coins de la structure s, J est le numéro du coin, nars est le nombre d'arêtes de la structure s, R est le numéro de l'arête, Nas est le nombre de traceurs ascendants et n est le numéro du traceur ascendant.

L'invention concerne donc également un programme informatique de mise en oeuvre de la méthode décrite précédemment, ainsi qu'un support de stockage sur lequel est mémorisé un tel programme.

Plus particulièrement, l'invention concerne un programme informatique comprenant un moyen de code de programme informatique adapté pour exécuter les étapes d'une méthode conforme à l'invention, comme décrite précédemment, lorsque ledit programme est exécuté sur un ordinateur.

Le programme informatique est de préférence adapté pour exécuter toutes les étapes de la méthode. Le programme informatique pourra être réalisé avec tout code connu de l'homme du métier, et en particulier à l'aide d'un code mettant en oeuvre une modélisation par éléments finis, avantageusement tridimensionnelle.

L'invention concerne également un programme informatique selon l'invention mis en oeuvre sur un support lisible par un ordinateur, du genre disque magnétique (disque dur ou CD-ROM par exemple).

L'invention concerne enfin en tant que tel un support, par exemple un disque dur ou un CD-ROM, pouvant être lu par un ordinateur et sur lequel est enregistré un programme conforme à l'invention.

En définitive, la méthode conforme à l'invention, en modélisant finement les trois conditions nécessaires à une capture de foudre réussie (formation d'un traceur ascendant, propagation stable du traceur ascendant à la rencontre du traceur descendant et jonction réussie des deux traceurs) permet de calculer avec une excellente précision la distance de sécurité, ce qui permet d'augmenter la fiabilité et la sécurité des installations de protection.

POSSIBILITE D'APPLICATION INDUSTRIELLE

L'invention trouve son application industrielle dans la conception et la mise en oeuvre, en particulier de façon informatisée, d'une méthode d'évaluation de l'étendue de la zone de protection conférée par un dispositif de capture de coup de foudre.

**Revendications**

1. Méthode d'évaluation de l'étendue (D) de la zone de protection conférée par au moins un dispositif (1, 1A, 1 B, 1 C) de capture de coup de foudre, ledit coup de foudre étant formé par la propagation et la jonction d'un traceur ascendant (3, 3A, 3B, 3C) et d'un traceur descendant (4), ladite méthode étant basée sur un modèle de progression de traceur dans lequel chaque traceur est modélisé par une succession de segments (6, 7, 8, 9, 10, 11, 12, 13, 14, 15) chargés électriquement, chaque segment (6, 7, 8, 9, 10, 11, 12, 13, 14, 15) s'étendant, dans le sens de sa propagation, entre une extrémité arrière et une extrémité avant, ladite méthode étant **caractérisée en ce qu'**elle comprend au moins une étape de vérification de la jonction entre le traceur descendant (4) et le traceur ascendant (3, 3A, 38, 3C) dans laquelle on calcule le champ électrique le long d'une ligne fictive joignant le traceur descendant (4) et le traceur ascendant (3, 3A, 3B. 3C) et on vérifie que ledit champ électrique est, partout sur ladite ligne fictive, supérieur au champ électrique minimal nécessaire à la propagation du traceur ascendant.

2. Méthode selon la revendication 1 **caractérisée en ce que** la ligne fictive est un segment de droite.

3. Méthode selon l'une des revendications 1 ou 2 **caractérisée en ce que** le champ électrique minimal nécessaire à la propagation du traceur ascendant est compris entre 200 et 800 kV/m, et est de préférence sensiblement égal à 500 kV/m.

4. Méthode selon l'une des revendications 1 à 3 **caractérisée en ce qu'**elle comprend une étape de modélisation de la charge des traceurs (3, 3A, 3B, 3C, 4) dans laquelle on associe à chaque segment (6, 7, 8, 9, 10, 11. 12, 13, 14, 15) d'une part une distribution linéique de charge ($\lambda$) et d'autre part une charge ponctuelle (16, 19) située à l'extrémité avant du segment concerné.

5. Méthode selon la revendication 4 **caractérisée en ce que**, pour chaque segment, la distribution linéique de charge ($\lambda$) est sensiblement uniforme, tandis que la charge ponctuelle (16, 19) est sensiblement constante.

6. Méthode selon la revendication 4 **caractérisée en ce que** pour chaque segment (13, 14, 15) de traceur ascendant, la distribution linéique ($\lambda$) de charge est comprise entre 20 et 70 $\mu$C/m, et est de préférence sensiblement égale à 50 $\mu$C/m.

7. Méthode selon l'une des revendications 1 à 6 **caractérisée en ce qu'**elle comprend une étape de modélisation de la vitesse des traceurs ascendant et descendant (3, 3A, 3B. 3C, 4) dans laquelle on considère que les traceurs ascendant (3, 3A, 3B, 3C) et descendant (4) se propagent à vitesse constante, dès lors que le traceur ascendant (3, 3A, 3B, 3C) est amorcé.

8. Méthode selon la revendication 7 **caractérisée en ce que** la vitesse de propagation du traceur descendant (4) est considérée comme étant constante.

9. Méthode selon la revendication 7 ou 8 **caractérisée en ce que** le rapport de la vitesse de propagation du traceur descendant (4) sur la vitesse de propagation du traceur ascendant (3, 3A, 3B. 3C) est sensiblement compris entre 0,1 et 8, et est préférentiellement sensiblement compris entre 0,5 et 4.

10. Méthode selon l'une des revendications 1 à 9 **caractérisée en ce qu'**elle comprend une étape de modélisation du retard à l'amorçage du dispositif de capture (1, 1A, 1B, 1C), dans laquelle on considère que lorsque le champ électrique minimal nécessaire à la propagation du traceur ascendant (3, 3A, 3B, 3C) est atteint, le traceur ascendant ne sera pas amorcé tant que le traceur descendant (4) n'a pas progressé d'une distance égale au produit du retard à l'amorçage et de la vitesse du traceur descendant.

**11.** Méthode selon l'une des revendications 1 à 10 **caractérisée en ce qu'**au moins un dispositif de capture (1, 1A, 1B, 1C) est posé sur le sol (2).

**12.** Méthode selon l'une des revendications 1 à 11 **caractérisée en ce qu'**au moins un dispositif de capture (1, 1A, 1B, 1C) repose sur une superstructure correspondante, ladite superstructure présentant des singularités géométriques, du genre arêtes ou coins.

**13.** -Méthode selon la revendication 12 **caractérisée en ce qu'**elle comprend un étape de vérification de l'amorçage d'un traceur ascendant (3, 3A, 3B, 3C) à partir de chacune desdites singularités.

**14.** Méthode selon l'une des revendications 1 à 13 **caractérisée en ce que** le traceur descendant (4) se propage, dès son amorçage, selon une direction oblique relativement à la normale au sol (2).

**15.** Méthode selon l'une des revendications 1 à 14 **caractérisée en ce qu'**elle constitue une méthode numérique bidimensionnelle.

**16.** Méthode selon l'une des revendications 1 à 14 **caractérisée en ce qu'**elle constitue une méthode numérique tridimensionnelle.

**17.** Programme informatique comprenant un moyen de code de programme informatique adapté pour exécuter les étapes d'une méthode conforme à l'une des revendications 1 à 16 lorsque ledit programme est exécuté sur un ordinateur.

**18.** Programme informatique selon la revendication 17 mis en oeuvre sur un support lisible par un ordinateur.

**19.** Support pouvant être lu par un ordinateur et sur lequel est enregistré un programme conforme à la revendication 17.

**Claims**

**1.** A method for evaluating the extent (D) of the area of protection due to covered by at least one lightning capture device (1, 1A, 1B, 1C), the lightning strike being formed by the propagation and the junction of an upward leader stroke (3, 3A, 3B, 3C) and a downward leader stroke (4), said method being based on a stroke progression model in which each stroke is modelled by a series of electrically charged segments (6, 7, 8, 9, 10, 11, 12, 13, 14, 15), each segment (6, 7, 8, 9, 10, 11, 12, 13, 14, 15) extending, in the direction of propagation, between a rear end and a front end, the method being **characterised in that** it comprises at least one step of verifying the junction between the downward leader stroke (4) and the upward leader stroke (3, 3A, 3B, 3C), in which there is calculated the electrical field along a fictitious line joining the downward leader stroke (4) and the upward leader stroke (3, 3A, 3B, 3C) is calculated; and in which it is verified that said electrical field is, everywhere on the fictitious line, higher than the minimum electrical field necessary for the propagation of the upward leader stroke.

**2.** The method according to claim 1, **characterised in that** the fictitious line is a straight line segment.

**3.** The method according to one of claim 1 or 2, **characterised in that** the minimum electrical field necessary for the propagation of the upward leader stroke is between 200 and 800 kV/m, and is preferably substantially equal to 500 kV/m.

**4.** The method according to any one of claims 1 to 3, **characterised in that** it includes a step of modelling the electrical charge of the leader strokes (3, 3A, 3B, 3C, 4), in which each segment (6, 7, 8, 9, 10, 11, 12, 13, 14, 15) is associated with a linear charge distribution ($\lambda$) and a point charge (16, 19) located at the front end of the segment concerned.

**5.** The method of claim 4, **characterised in that**, for each segment, the linear charge distribution ($\lambda$) is substantially uniform for each segment, while the point charge (16, 19) is substantially constant.

**6.** The method of claim 4, **characterised in that**, for each upward leader stroke segment (13, 14, 15), the linear charge distribution ($\lambda$) for each upward leader stroke segment (13, 14, 15) is between 20 and 70 $\mu$C/m and is preferably substantially equal to 50 $\mu$C/m.

**7.** The method according to any one of claims 1 to 6, **characterised in that** it includes a step of modelling the speed of the upward and downward leader strokes (3, 3A, 3B, 3C, 4), in which the upward (3, 3A, 3B, 3C) and downward (4) leader strokes are propagated at a constant speed, as soon as ever since the upward leader stroke (3, 3A, 3B, 3C) is triggeredprimed.

**8.** The method of claim 7, **characterised in that** the propagation speed of the downward leader stroke (4) is considered to be constant.

**9.** The method of claim 7 or 8, **characterised in that** the ratio of the propagation speed of the downward leader stroke (4) over the propagation speed of the upward leader stroke (3, 3A, 3B, 3C) is substantially comprised between 0.1 and 8, and is preferably substantially comprised between 0.5 and 4.

**10.** The method according to any one of claims 1 to 9, **characterised in that** it includes a step of modelling the priming triggering delay of the capture device (1, 1A, 1B, 1C), in which it is considered that when the minimum electrical field needed for the propagation of the upward leader stroke (3, 3A, 3B, 3C) is reached, the upward leader stroke will not be primed triggered as long as the downward leader stroke (4) has not progressed by a distance equal to the product of the priming triggering delay and the speed of the downward leader stroke.

**11.** The method according to any one of claims 1 to 10, **characterised in that** at least one capture device (1, 1A, 1B, 1C) is placed on the ground (2).

**12.** The method according to any one of claims 1 to 11, **characterised in that** at least one capture device (1, 1A, 1B, 1C), rests on a corresponding superstructure, the superstructure having geometric protuberancessingularities, such as edges or corners.

**13.** The method according to claim 12, **characterised in that** it includes a step of verifying the priming triggering of an upward leader stroke (3, 3A, 3B, 3C) from each of said geometric protuberancessingularities.

**14.** The method according to any one of claims 1 to 13, **characterised in that** the downward leader stroke (4) is propagated, ever sinceas soon as it is triggerprimed, in an oblique direction with respect to the normal to the ground (2).

**15.** The method according to any one of claims 1 to 14, **characterised in that** it constitutes a two-dimensional digital method.

**16.** The method according to any one of claims 1 to 14, **characterised in that** it constitutes a three-dimensional digital method.

**17.** A computer program including computer program coding means suitable for carrying out the steps of a method according to one of claims 1 to 16 when said program is run on a computer.

**18.** The computer program according to any one of claims 1 to 17, implemented on a computer-readable medium.

**19.** A medium capable of being read by a computer and on which a computer program according to claim 17 is recorded.

**Patentansprüche**

**1.** Verfahren zur Bewertung des Umfangs (D) der Schutzzone, die durch mindestens eine Blitzfangeinrichtung (1, 1A, 1B, 1C) verliehen wird, wobei dieser Blitz durch die Ausbreitung und die Verbindung eines aufsteigenden Streamers (3, 3A, 3B, 3C) und eines absteigenden Streamers (4) geformt wird, wobei dieses Verfahren auf einem Modell der Streamerentwicklung basiert, in welchem jeder Streamer durch eine Aufeinanderfolge elektrisch geladener Segmente (6, 7, 8, 9, 10, 11, 12, 13, 14, 15) modelliert wird, wobei sich jedes Segment (6, 7, 8, 9, 10, 11, 12, 13, 14, 15) in Richtung seiner Ausbreitung zwischen einem hinteren Ende und einem vorderen Ende erstreckt, wobei dieses Verfahren **dadurch gekennzeichnet ist, dass** es mindestens einen Schritt des Prüfens der Verbindung zwischen dem absteigenden Streamer (4) und dem aufsteigenden Streamer (3, 3A, 3B, 3C) umfasst, in welchem das elektrische Feld entlang einer fiktiven Linie berechnet wird, die den absteigenden Streamer (4) mit dem aufsteigenden Streamer (3, 3A, 3B, 3C) verbindet, und geprüft wird, ob dieses elektrische Feld überall auf dieser fiktiven Linie größer ist als das minimale elektrische Feld, das zur Ausbreitung des aufsteigenden Streamers notwendig ist.

2. Verfahren nach Anspruch 1, **dadurch gekennzeichnet, dass** die fiktive Linie ein Geradensegment ist.

3. Verfahren nach einem der Ansprüche 1 oder 2, **dadurch gekennzeichnet, dass** das minimale elektrische Feld, das zur Ausbreitung des aufsteigenden Streamers notwendig ist, zwischen 200 und 800 kV/m liegt und bevorzugt im Wesentlichen gleich 500 kV/m ist.

4. Verfahren nach einem der Ansprüche 1 bis 3, **dadurch gekennzeichnet, dass** es einen Schritt des Modellierens der Ladung der Streamer (3, 3A, 3B, 3C, 4) umfasst, wobei jedem Segment (6, 7, 8, 9, 10, 11, 12, 13, 14, 15) einerseits eine lineare Ladungsverteilung ($\lambda$) und andrerseits eine Punktladung (16, 19) zugewiesen wird, die am vorderen Ende des betreffenden Segments liegt.

5. Verfahren nach Anspruch 4, **dadurch gekennzeichnet, dass** für jedes Segment die lineare Ladungsverteilung (Ä) im Wesentlichen einheitlich ist, während die Punktladung (16, 19) im Wesentlichen konstant ist.

6. Verfahren nach Anspruch 4, **dadurch gekennzeichnet, dass** für jedes Segment (13, 14, 15) des aufsteigenden Streamers die lineare Ladungsverteilung ($\lambda$) zwischen 20 und 70 $\mu$C/m liegt und bevorzugt im Wesentlichen gleich 50 $\mu$C/m ist.

7. Verfahren nach einem der Ansprüche 1 bis 6, **dadurch gekennzeichnet, dass** es einen Schritt des Modellierens der Geschwindigkeit der aufsteigenden und absteigenden Streamer (3, 3A, 3B, 3C, 4) umfasst, wobei angenommen wird, dass die aufsteigenden (3, 3A, 3B, 3C) und absteigenden (4) Streamer sich mit konstanter Geschwindigkeit ausbreiten, sobald der aufsteigende Streamer (3, 3A, 3B, 3C) gezündet worden ist.

8. Verfahren nach Anspruch 7, **dadurch gekennzeichnet, dass** die Ausbreitungsgeschwindigkeit des absteigenden Streamers (4) als konstant betrachtet wird.

9. Verfahren nach Anspruch 7 oder 8, **dadurch gekennzeichnet, dass** das Verhältnis der Ausbreitungsgeschwindigkeit des absteigenden Streamers (4) zur Ausbreitungsgeschwindigkeit des aufsteigenden Streamers (3, 3A, 3B, 3C) im Wesentlichen zwischen 0,1 und 8 liegt und bevorzugt im Wesentlichen zwischen 0,5 und 4 liegt.

10. Verfahren nach einem der Ansprüche 1 bis 9, **dadurch gekennzeichnet, dass** es einen Schritt des Modellierens der Zündverzögerung der Blitzfangeinrichtung (1, 1A, 1B, 1C) umfasst, wobei angenommen wird, dass, wenn das minimale elektrische Feld, das zur Ausbreitung des aufsteigenden Streamers (3, 3A, 3B, 3C) notwendig ist, erreicht ist, der aufsteigende Streamer nicht gezündet wird, solange der absteigende Streamer (4) nicht um eine Entfernung fortgeschritten ist, die dem Produkt der Zündverzögerung und der Geschwindigkeit des absteigenden Streamers entspricht.

11. Verfahren nach einem der Ansprüche 1 bis 10, **dadurch gekennzeichnet, dass** mindestens eine Blitzfangeinrichtung (1, 1A, 1B, 1C) auf dem Boden (2) angeordnet ist.

12. Verfahren nach einem der Ansprüche 1 bis 11, **dadurch gekennzeichnet, dass** mindestens eine Blitzfangeinrichtung (1, 1A, 1B, 1C) auf einem entsprechenden Aufbau ruht, wobei dieser Aufbau geometrische Singularitäten wie Kanten oder Ecken aufweist.

13. Verfahren nach Anspruch 12, **dadurch gekennzeichnet, dass** es einen Schritt des Prüfens der Zündung eines aufsteigenden Streamers (3, 3A, 3B, 3C) von jeder der Singularitäten aus umfasst.

14. Verfahren nach einem der Ansprüche 1 bis 13, **dadurch gekennzeichnet, dass** der absteigende Streamer (4) sich von seiner Zündung an in einer Richtung schräg zur Normalen zum Boden (2) ausbreitet.

15. Verfahren nach einem der Ansprüche 1 bis 14, **dadurch gekennzeichnet, dass** es eine zweidimensionale Berechnungsmethode ist.

16. Verfahren nach einem der Ansprüche 1 bis 14, **dadurch gekennzeichnet, dass** es eine dreidimensionale Berechnungsmethode ist.

17. Rechnerprogramm, umfassend ein Programmcodemittel, das geeignet ist, die Schritte eines Verfahrens nach einem der Ansprüche 1 bis 16 auszuführen, wenn dieses Programm auf einem Rechner ausgeführt wird.

18. Rechnerprogramm nach Anspruch 17, das auf einem computerlesbaren Datenträger ausgeführt ist.

19. Datenträger, der von einem Computer gelesen werden kann und auf welchen ein Programm nach Anspruch 17 gespeichert ist.

# FIG.1

# FIG.2

# FIG.3

# FIG.4

FIG.5

FIG.6

FIG.7

FIG.8

FIG.9

FIG.10

FIG.11

FIG.12

FIG.13

FIG.14

DEBUT

Lecture des données

Y a-t-il des structures élevées ?

non

oui

Aller à l'organigramme I

Aller à l'organigramme II

FIG. 15

Organigramme I

Calcul du potentiel seuil pour toutes les tiges

Propagation du leader descendant par pas

k = 1

(A)

Calcul du potentiel au sommet d'une tige K

(E)

Potentiel ≥ potentiel seuil

oui — non

K = K+1

K < nt

oui — non

(A)

Calcul du champ et du potentiel pour chaque leader en prenant en considération le temps de retard à l'amorçage de la tige.

K = K+1

K < nt

non — oui

(A)

(B)

Calcul de l'écart entre le sol et le leader ascendant

écart > pas de propagation

non — oui

Jonction avec le sol

(D)

FIG.16

FIG.17

FIG.18

FIG.19

FIG. 20

FIG.21

**EP 1 794 858 B1**

RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6320119 B